# EUROPÄISCHE PATENTSCHRIFT

(11) **EP 1 405 054 B1**
(45) Veröffentlichungstag und Bekanntmachung des Hinweises auf die Patenterteilung: **10.08.2005**
(21) Anmeldenummer: 02700136.1
(22) Anmeldetag: 05.01.2002
(51) Int. Cl.: G01N 19/04, B29C 65/00, G01N 3/00

(54) **SIEGELNAHT-PRÜFGERÄT**
SEALING SEAM TEST DEVICE
DISPOSITIF DESTINE A TESTER DES JOINTURES SOUDEES

(30) Priorität: 10.07.2001 DE 20111126 U
(43) Veröffentlichungstag der Anmeldung: 07.04.2004
(73) Patentinhaber: Wolf, Hans, D-74821 Mosbach (DE); Wolf, Christian, 74821 Mosbach (DE)
(72) Erfinder: Wolf, Hans, D-74821 Mosbach (DE); Wolf, Christian, 74821 Mosbach (DE)
(74) Vertreter: Wolf, Günter, Dipl.-Ing.
(86) Internationale Anmeldenummer: PCT/DE2002/000016
(87) Internationale Veröffentlichungsnummer: WO 2003/006959

(56) Entgegenhaltungen:
- WO-A-01/88503
- US-A- 5 331 858
- US-A- 5 438 863
- US-A- 5 939 619
- WOLF, CHRISTIAN: "Validierung von Siegelmaschinen" ZENTRALSTERILISATION, [Online] Nr. 9, 2001, XP002228380 Gefunden im Internet: <URL:http://www.hawo.com/validation_d.htm> [gefunden am 2003-01-23]

## Beschreibung

Die Erfindung betrifft ein Siegelnaht-Prüfgerät zur sogenannten Validierung von Folien-Siegelgeräten gemäß Oberbegriff des unabhängigen Patentanspruches 1.

Eine solche Prüfung von an Schlauch- oder Beutelverpackungen angebrachten Siegelnähten ist insbesondere dann von Interesse, wenn die in eine solche Verpackung eingebrachten Gegenstände steril bleiben müssen.
Prüfgeräte für diesen Zweck sind bekannt und weisen Befestigungsmittel auf zur Fixierung einer die zu untersuchende Siegelnaht enthaltenden Probe und Elemente, mit denen die an der Probe zu untersuchende Siegelnaht auseinandergezogen werden kann und die zum Bruch bzw. zum Aufreißen der Siegelnaht führende Kraft bestimmbar ist.
Abgesehen von Prüfgeräten für diesen speziellen Zweck sind auch Materialprüfgeräte bspw. nach der US-A-5,438,863 bekannt, die mit einer Meßwertelektronik ausgestattet sind. Ferner ist nach der US-A-5,939,619 eine Prüfkammer bekannt, die zur Dichtigkeitsprüfung von versiegelten Verpackungen dient. Mit einem Gasanalysegerät wird aus der gegf. undichten Packung austretendes Spurengas ermittelt. Für das Analysegerät ist vorgesehen, dieses mit einem Mikrocomputer zu verketten, der dann ablesbar die Analysedaten ablesbar mit einem Verpackungskontrollmuster vergleicht.
In der Verpackungstechnik ist es üblich, Gegenstände in Klarsichtbeuteln, -schläuchen oder dergl. Packstoff zu verpacken und derartigen Packstoff mit Hilfe eines Siegel- bzw. Schweißgerätes zu verschließen, wobei, abgesehen von keimanfälligen Nahrungs- und Genußmitteln, in der Regel keine Sterilität verlangt wird. Im medizinischen Bereich ist demgegenüber eine Sterilverpackung von bspw. Einweg-Operationsbesteckteilen, med. Nahtmaterial, Injektionsnadeln, Einwegspritzen oder dgl. in hohem Maße erforderlich, welcher Forderung auch Klarsicht-Sterilgutverpackungen in Schlauch- oder Beutelform genügen, bei denen die eine Seite aus einer transparenten Folie und die andere Seite aus Spezial-Papier bestehen kann. Nach dem Befüllen einer solchen Verpackung mit dem zu sterilisierenden Gut wird diese durch mindestens eine von einem Siegelgerät (Impulssiegelgerät, Durchlaufsiegelgerät, Backensiegelgerät etc.) erzeugte Siegelnaht verschlossen. Dabei kommen unterschiedliche siegelgerätetypen zum Einsatz, nämlich: Einfache Impulssiegelgeräte mit aufeinanderpreßbaren Siegelbacken, Durchlaufsiegelgeräte, bei denen bspw. der offene Rand eines zu versiegelnden Verpackungsbeutels zur Erzeugung einer Siegelnaht auf der einen Geräteseite eingeführt, im Durchlauf versiegelt und auf der anderen Seite entnommen wird. Aufwenere digere Geräte sind mikroprozessorgesteuert und weisen eine elektronische Anzeige- und Bedienungseinheit zur Eingabe der Siegelparameter und zur Bedienung des Gerätes auf (menügesteuerte Benutzerführung. Darüber hinaus können derar Geräte auch ein integriertes Druckwerk aufweisen, wodurch es möglich ist, während des Siegelvorganges eine i.d.R. frei wählbare Beschriftung in der Nähe der Siegelnaht auf die Verpackung zu drucken z.B. Chargennummer, Sterilisations- und Verwendbarkeitsdaten, Personalnummer, Barcode etc.). Das in eine solche Verpackung eingebrachte Gut wird erst in der per Siegelnaht verschlossenen Sterilgutverpackung sterilisiert und in dieser bis zur Verwendung gelagert. Damit es nach der Sterilisation zu keiner verkeimung des sterilisierten Inhaltes kommen kann, sind an die Beschaffenheit der Siegelnaht hohe Anforderungen zu stellen. So sollte diese insgesamt hinreichend stabil sein, eine bestimmte Breite haben und dabei durchgehend, egal ob flächig oder gerillt versiegelt, dicht versiegelt (d.h. ohne Fehlstellen) sein, damit keine Keime eindringen können. Die Qualität der Siegelnaht ist für den jeweils verwendeten Packstoff abhängig von den jeweiligen Siegelparametern, d.h. dem beim Verschließen auf das Verpackungsmaterial ausgeübten Siegeldruck, der gewählten Siegeltemperatur und der Zeitdauer, in der Temperatur und Druck beim Versiegeln auf die zu verschließende Verpackung einwirken. Um sicherzustellen, daß die vom Siegelgerät erzeugte Siegelnaht den physikalischen Belastungen eines Sterilisationsverfahrens sowie einer folgenden Lagerung und Handhabung ohne Beeinträchtigung widersteht, und um eine nachträgliche Kontamination des Sterilgutes auszuschließen, muß das Siegelgerät regelmäßig validiert werden, d.h. es muß geprüft werden, ob das Gerät die besonderen Anforderungen, die auf diesem speziellen Anwendungsgebiet an die Siegelnähte gestellt werden, erfüllt. Diese sogenannte Validierung eines für die Sterilgutverpackung verwendeten Siegelgerätes erfolgt dabei durch die Bestimmung der Zug- bzw. Aufreißfestigkeit einer vom Siegelgerät erzeugten Siegelnaht am verwendeten Verpackungsmaterial gemäß der Norm EN-868-5.

Die Aufreißfestigkeit der Siegelnaht wird dabei an entsprechend dem Prüfverfahren nach EN 868-5 erstellten Proben mit Hilfe des einleitend erwähnten Siegelnaht-Prüfgerätes ermittelt. Das freie Ende der Kunststoff-Verbundfolie der einen Probenseite und das freie Ende des Papiers derselben Probenseite werden jeweils an einem Befestigungselement fixiert, bei denen es sich bspw. um Klemmbacken handeln kann. Anschließend wird die Siegelnaht mit einer in der Norm vorgegebenen Prüfgeschwindigkeit auseinander gezogen und die zum Bruch bzw. zum Aufreißen der Siegelnaht führende Kraft bestimmt. Die zum Aufreißen der Siegelnaht aufgewendete Kraft ist in einem entsprechenden Prüfbericht oder dergleichen zu dokumentieren. Die Größe des bestimmten Wertes gibt dabei Auskunft darüber, ob das Siegelgerät ordnungsgemäß funktioniert oder nicht, d.h. ob beim jeweils verwendeten Verpackungsmaterial Siegeltemperatur, Siegeldruck, Siegelzeit etc. am Foliensiegelgerät richtig eingestellt sind.

Da in der Regel die Bereithaltung derartige Einzel-Sterilgutverpackungen auf Vorrat erfolgt, d.h., das in der Verpackung sterilisierte Gut in dieser unter Umständen längere Zeit lagert, ist das dokumentierte Prüfergebnis ein wichtiger Beleg, um jederzeit nachträglich die ordnungsgemäße Funktion eines Siegelgerätes nachweisen zu können, mit dem die Versiegelung durchgeführt wurde.

Im täglichen Gebrauch von Siegelgeräten in Arztpraxen, Kliniken, der Industrie oder auch in Reinraumproduktionen ist es bisher nicht Standard, die verwendeten Siegelgeräte routinemäßig mittels eines Siegelnaht-Prüfgerätes zu validieren. Vielmehr ist es üblich, die Funktion des Siegelgerätes mittels optischer Beurteilung einer an einem speziellen Kontraststreifen erzeugten Siegelnaht zu überprüfen (sogenannter Seal Check). Eine derartige Überprüfung sagt jedoch nicht direkt etwas über die tatsächliche Zugfestigkeit und damit die chemische und mechanische Beständigkeit der erzeugten Siegelnaht aus.

Selbst wenn bekannte Siegelnaht-Prüfgeräte zur regelmäßigen Validierung von Siegelgeräten verwendet werden, handelt es sich dabei um separate Geräte, die insoweit isolierte Prüfergebnisse liefern, die in aufwendiger Weise gesondert vom sterilisierten Gut dokumentiert werden müssem, d.h., eine korrekte Zuordnung zu den einzelnen Verpackungs- und Sterilisationschargen ist infolgedessen nur mit beträchtlichem Aufwand und entsprechender Sorgfalt zu erreichen, was trotz dabei gegebener Fehlerquellen mangels besserer Möglichkeietn bislang hingenommen werden mußte.

Der Erfindung liegt demgemäß die Aufgabe zugrunde, hierzu Abhilfe dahingehend zu schaffen, daß sich die Qualität der von einem Siegelgerät hergestellten Siegelnähte im Praxis-und Klinikalltag mit geringem Aufwand und insbesondere zuverlässig überprüfen läßt und bei einfacher und zweckmäßiger Handhabung des Gerätes selbst eine problemlose Dokumentation des Validierungsergebnisses gewährleistet ist.

Diese Aufgabe ist bei einem siegelnaht-Prüfgerät der eingangs genannten Art erfindungsgemäß durch die im Kennzeichen des unabhängigen Patentanspruches 1 angeführten Merkmale gelöst. Vorteilhafte Weiterbildungen ergeben sich nach den abhängigen Patentansprüchen.

Bei dem Weiterverarbeitungsgerät handelt es sich um das Folien-Siegelgerät selbst, was mit noch näher zu erläuternden Vorteilen verbunden ist.

Mittels der erfindungsgemäßen Schnittstelle am Siegelnaht-Prüfgerät und dessen Ausstattung mit einer Weiterverarbeitungselektronik, einer dazu passenden Schnittstelle am Weiterverarbeitungsgerät und einer entsprechenden Steuerung ist es möglich, die bei einem Test der Siegelnaht ermittelten Daten gezielt weiterzuleiten und am Weiterverarbeitungsgerät einen gewünschten Effekt herbeizuführen. Dabei ist das Siegelnaht-Prüfgerät in bestehender Verbindung mit einem Weiterverarbeitungsgerät über dessen Bedienungseinheit bedienbar bzw. steuerbar, d.h., durch diese Maßnahme vereinfacht sich die Handhabung beider Geräte. Ferner müssen zusatzinformationen, die sowohl für den Siegel- als auch für den Validierungsvorgang nötig sind (z.B. Datum, Personalnummer etc.) für eine Dokumentation nicht doppelt eingegeben werden.

Die Weiterverarbeitung kann zunächst darin bestehen, daß der Meßwert der Bruchkraft bzw. eine aufgenommene Meßkurve an einer i.d.R. ohnehin am Siegelgerät vorgesehenen Anzeigeeinheit angezeigt wird ggf. zusammen mit einem entsprechenden Hinweis auf das Testergebnis (beispielsweise "Test bestanden", "Test nicht bestanden").

Desweiteren kann das Testergebnis auch in einem Speicher des Siegelgerätes z.B. mit weiteren Informationen (wann und von wem die Validierung durchgeführt wurde) gespeichert werden. Ferner ist es auch möglich, das Testergebnis mit Hilfe eines am Siegelgerät vorgesehenen Druckers auszudrucken. Dies kann z.B. auf einem Dokumentationsbogen erfolgen oder beim Siegelvorgang auf der zu versiegelnde Verpackung selbst gegf. zusammen mit weiteren, im vorliegenden Zusammenhang interessierenden Informationen bzw. Daten.

Ein Aufdruck auf die Sterilgutverpackung ist besonders vorteilhaft, da auf diese Weise für die jeweilige Verpackung die korrekte Funktion des Siegelgerätes belegbar ist. Darüber hinaus ist auch realisierbar, daß das am Siegelnaht-Prüfgerät ermittelte Testergebnis für eine direkte Einflußnahme auf das Siegelgerät genutzt wird, bspw. in der Weise, daß am Siegelgerät ein Alarm ausgelöst oder das Gerät blockiert wird, wenn eine Probe den Test nicht bestanden haben sollte. Zahlreiche weitere Varianten sind möglich.

Für die Schnittstelle kommt vorteilhaft eine serielle in Betracht, da durch eine solche mit geringem Aufwand bei elektrischen Geräten eine Verbindung untereinander zu realisieren ist. Ferner sind Siegelgeräte bereits z.T. mit einer derartigen Schnittstelle ausgerüstet, um beispielsweise einen Computer anschließen zu können. Alternativ ist jedoch auch jede andere Art von Schnittstelle einsetzbar, z.B. eine Infrarot-Schnittstelle, Funk-Schnittstelle, USB-Schnittstelle usw.

Es besteht somit ein infolge des nunmehr erfindungsgemäß ebenfalls mit einer Verarbeitungselektronik und einer Schnittstelle ausgestattenen Prüfgerätes ermöglichter Datenaustausch, eine enge Zusammenarbeit zwischen dem Siegelgerät und dem Siegelnaht-Prüfgerät.

Das erfindungsgemäße Siegelnaht-Prüfgerät wird nachfolgend anhand der zeichnerischen Darstellung von Ausführungsbeispielen näher erläutert.

Es zeigt:
- Fig. 1: perspektivisch und schematisch eine bevorzugte Ausführungsform des erfindungsgemäßen Siegelnaht-Prüfgerätes;
- Fig. 2: perspektivisch ein ausgeschnittener Verpackungprobestreifen mit Siegelnaht;
- Fig. 3: schematisch in Seitenansicht den im Siegelnaht-Prüfgerät eingespannten Probestreifen;
- Fig. 4: perspektivisch ein Durchlaufsiegelgerät für Verpackungsbeutel;
- Fig. 5: stark vereinfacht des Schaltschema das Prüfgerätes in Verbindung mit Weiterverabreitungsgeräten und
- Fig. 6: das Beispiel einer mittels des Prüfgerätes ermittelten Kraft/Weg-Meßkurve.

### Beschreibung der bevorzugten Ausführungsform

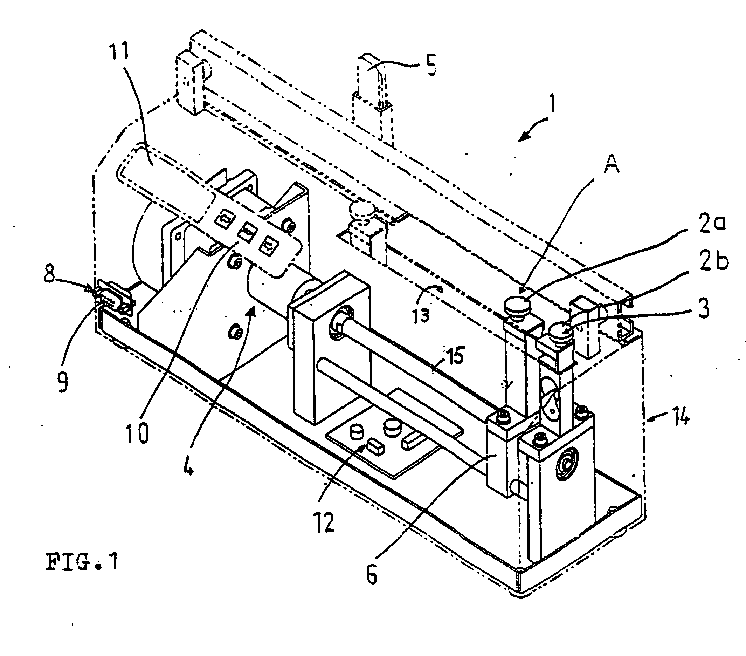

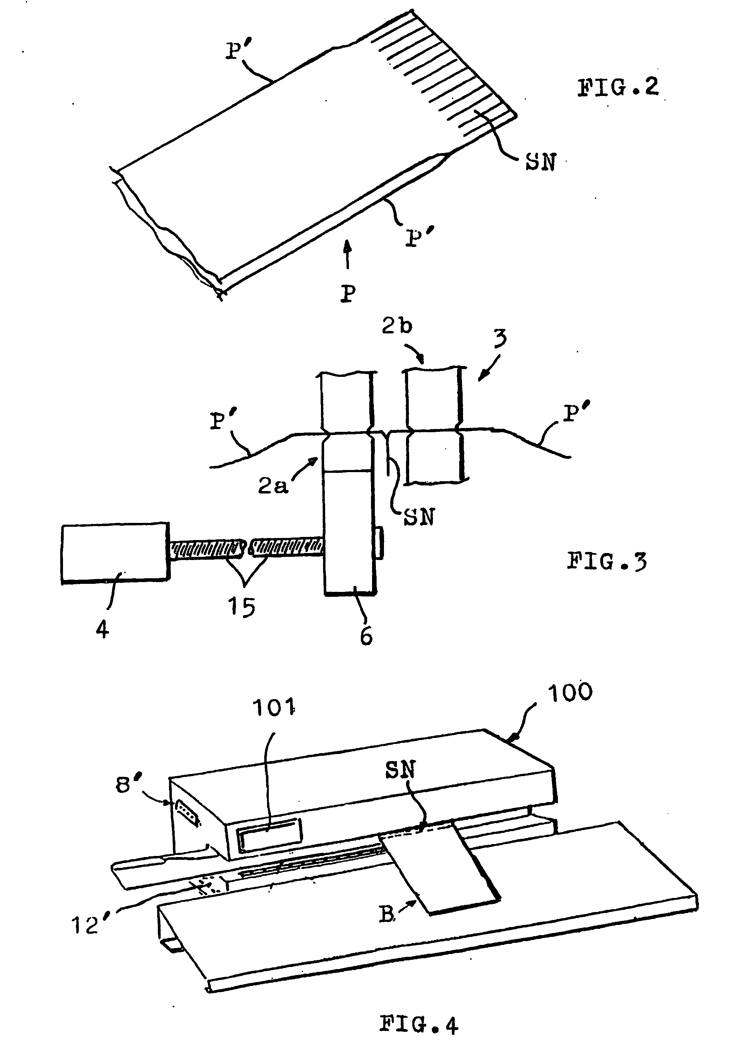

Fig. 1 zeigt ein Siegelnaht-Prüfgerät 1 zur Validierung eines Folien-Siegelgerätes bspw. nach Fig. 4. Das Siegelnaht-Prüfgerät 1 weist zwei in Form von Klemmbacken 2 ausgebildete Befestigungselemente 3 auf, und zwar ein im Gerät verstellbares Klemmbackenpaar 2a und ein feststehende Klemmbackenpaar 2b zur Fixierung einer die zu untersuchende Siegelnaht SN aufweisenden Probe P (siehe Fig. 2) und ferner eine nur schematisch dargestellte Verstelleinrichtung mit Motor 4, der mittels einer Spindel 15 das Klemmbackenpaar 2a verstellt.

Wie ferner aus Fig. 1 ersichtlich, ist das Siegelnaht-Prüfgerät 1 erfindungsgemäß und vorteilhaft in Form eines kleinen, horizontal aufstellbaren Tischgerätes ausgebildet, wobei die Klemmbackenpaare 2a, 2b zwecks bequemer Anbringung der Siegelnahtproben P oberseitig aus einem Schlitz 13 des Gerätegehäuses 14 herausragen.
Fig. 3 verdeutlicht die Verpackungsprobe P mit der zu prüfenden Siegelnaht SN im eingespannten Zustand zwischen den Klemmbackenpaaren 2a und 2b.

Mit Hilfe eines Schneidelementes 5, das hier vorteilhaft direkt mit am Siegelnaht-Prüfgerät 1 angeordnet ist, um die Handhabung zu erleichtern und um die Anzahl der für die Validierung erforderlichen Einzelgeräte zu reduzieren, wird gemäß Norm EN 868-5 aus jeweiligen Sterilgut-Verpackungsmaterial mittig eine streifenförmige Probe P (siehe Fig. 2) im rechten Winkel zur Siegelnaht SN ausgeschnitten.

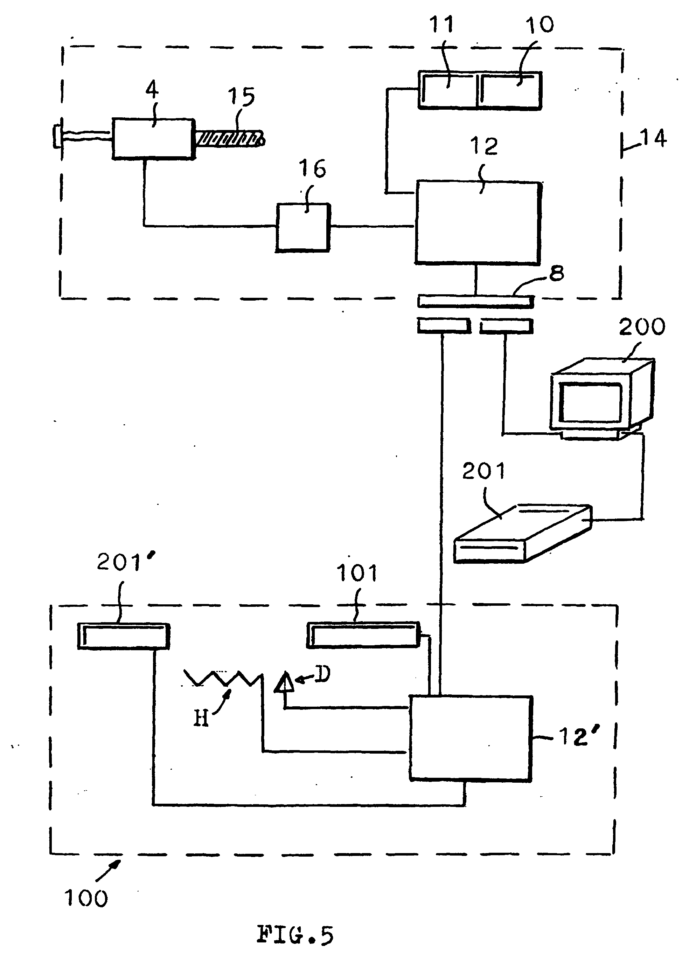

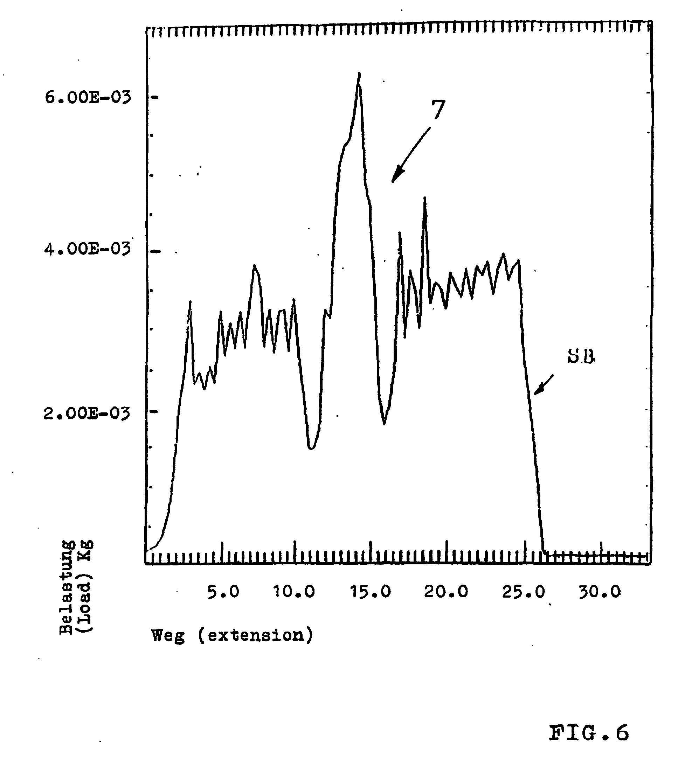

Die sich dabei ergebenden freien Enden P' der Folien werden jeweils in die in Ruheposition A befindlichen Klemmbackenpaare 2a,2b eingespannt. Das andere, den Abschnitt der Siegelnaht SN enthaltende Ende der Probe P bleibt unfixiert frei unterhalb der Klemmbacken hängen. Anschließend wird die Probe P und damit auch die Siegelnaht SN mit einer vorgegebenen Geschwindigkeit auseinandergezogen und belastet, indem ein das bewegliche Klemmbackenpaar 2a tragender, vom Motor 4 angetriebener Positionierschlitten 6 vom stationären Klemmbackepaar 2b weg in die gestrichelt dargestellte Position verstellt wird. Von einer in Fig. 5 schematisch mit dargestellten Meßeinheit 16 wird die zum Bruch bzw. zum Aufreißen der Siegelnaht SN führende Kraft registriert. Dabei kann die aufgebrachte Kraft kontinuierlich über die ganze Testdauer gemessen werden, was bspw. zu einer Meßkurve 7 (siehe Fig. 6) führt, die die jeweils auftretenden Kräfte in Abhängigkeit vom Weg, über den die Probe P auseinandergezogen wurde, verdeutlicht, oder es wird nur die zum Zeitpunkt des Siegelnahtbruches erforderliche Kraft ermittelt. Dieser Bruchbereich ist in der in Fig. 6 dargestellten Kurve mit SB bezeichnet.

Das Siegelnaht-Prüfgerät 1 ist ferner erfindungsgemäß mit einer Weiterverarbeitungselektronik 12 (Elektronik mit Meßverstärker, Mikroprozessor, Speicher) ausgestattet und weist eine Schnittstelle 8 auf, um das Testgerät für eine Weiterverarbeitung des bei der Zugfestigkeitsuntersuchung erhaltenen Testergebnisses mit einem Weiterverarbeitungsgerät, vorzugsweise mit dem zu validierenden Folien-siegelgerät, verbinden zu können. Bei der dargestellten Schnittstelle 8 handelt es sich um eine serielle Schnittstelle 9, und das Siegelgerät 100 (siehe Fig. 3), mit dem das Siegelnaht-Prüfgerät 1 bspw. über ein Kabel verbindbar ist, weist ebenfalls eine entsprechende Schnittstelle 8' und eine entsprechende Verarbeitungselektronik 12' auf.

Die bei der Zugfestigkeitsprüfung der Siegelnaht SN ermittelte Meßkurve bzw. der Wert der zum Bruch bzw. Aufriß der Siegelnaht führenden Bruchkraft (sogenannter "Peel-Wert") wird gemäß eines vorteilhaften Ausführungsbeispieles an einer nur schematisch dargestellten Anzeige- und Bedieneinheiteinheit 101 des Siegelgerätes 100 angezeigt und in dessen Speichereinheit gespeichert (z.B. mit Datum, Uhrzeit der Validierung, Maschinennummer des validierten Gerätes, Identifikation der Person, die die Validierung durchgeführt hat, usw.). Das ermittelte Meßergebnis kann auch zusammen mit zusätzlichen Informationen mittels einer Druckereinheit 201' des Siegelgerätes 100 auf einer Sterilgutverpackung oder auf einem Dokumentationsbogen abgedruckt werden.

Das dargestellte Siegelnaht-Prüfgerät 1 ist derart ausgebildet, daß es bei gegebener Verbindung mit dem Siegelgerät 100 von dessen Bedienungseinheit 101 aus bedienbar bzw. steuerbar ist, d.h. die für die Validierung zu dokumentierenden Informationen werden über die Siegelgerät-Bedienungseinheit 101 eingegeben und ggf. das Siegelnaht-Prüfgerät 1 auch von da aus gestartet.

Alternativ kann das Siegelnaht-Prüfgerät 1 selbstverständlich via Schnittstelle 8 auch mit einem Computer 200 als Weiterverarbeitungsegrät verbunden und in diesem die Meßergebnisse entsprechend verarbeitet werden, wobei natürlich auch die Möglichkeit besteht, das Siegelnaht-Prüfgerät 1 vom Computer aus zu steuern. Die Schnittstelle 8 bzw. 9 kann übrigens vorteilhaft auch durch zwei Steckanschlüsse repräsentiert sein (nicht besonders dargestellt), um zusätzlich zur Verbindung zum Siegelgerät 100 auch einen Computer 200 mit Drucker 201 anschließen zu können, wenn das Siegelgerät 100 nicht mit Elementen zum Drucken oder Bedrucken ausgestattet sein sollte.

Beim dargestellten Ausführungsbeispiel des Siegelnaht-Prüfgerätes 1 weist dieses eine separate Bedienungseinheit 10 und eine eigene Anzeigeeinheit 11 auf. Durch diese Maßnahme ist es möglich, das Siegelnaht-Prüfgerät 1 bei Bedarf auch unabhängig von einem Siegelgerät zu benutzen, was bspw. dann von Interesse ist, wenn mit einem Siegelnaht-Prüfgerät 1 unterschiedliche Siegelgeräte validiert werden sollen, die z.B. keine passende Schnittstelle oder keine elektronische Anzeige- und Bedienungseinheit haben.

Bzgl. der elektrischen bzw. elektronischen Gesamtverschaltung des Gerätes und dessen Verbindung mit Weiterverarbeitungsgeräten wird im übrigen auf Fig. 5 verwiesen, in der entsprechende Bezugszeichen gemäß obiger Beschreibung angegeben sind. Die mit H und D bezeichneten Symbole stehen hierbei für die Temperatur- und die Druckeinstellung der nicht dargestellten Siegelwerkzeuge im Foliensiegelgerät 100.

## Patentansprüche

1. Siegelnaht-Prüfgerät zur sogenannten Validierung eines Folien-Siegelgerätes (100) durch Bestimmung der Aufreißfestigkeit einer mittels des Folien-Siegelgerät hergestellten Siegelnaht (SN), mit Befestigungsmitteln (3) zur Fixierung einer die zu untersuchende Siegelnaht (SN) aufweisenden Siegelnahtprobe mit einer Meßelektronik und einer Zugfestigkeitsprüfeinrichtung, wobei die an der Probe zu untersuchende Siegelnaht auseinander gezogen und die zum Bruch bzw. Aufreißen der Siegelnaht erforderliche Kraft bestimmt wird,
**dadurch gekennzeichnet,**
**dass** die Meßelektronik des in Form eines horizontal aufstellbaren, oberseitig mit aus einem Schlitz (13) herausragenden Klemmbacken (2a,2b) versehenen Tischgerätes ausgebildeten Siegelnaht-Prüfgerätes (1) als Weiterverarbeitungselektronik (12) ausgebildet und mit einer Schnittstelle (8) ausgestattet ist, durch die für eine unmittelbare Weiterverarbeitung des beim jeweiligen Test erhaltenen Meßergebnisses das Prüfgerät (1) mit einem eine entsprechende Verarbeitungselektronik (12') aufweisenden Weiterverarbeitungsgerät verbindbar ist, wobei das Prüfgerät in Verbindung via Schnittstelle (8) mit dem Weiterverarbeitungsgerät über dessen Bedienungseinheit (101) bedienbar bzw. steuerbar ist.

2. Siegelnaht-Prüfgerät nach Anspruch 1,
**dadurch gekennzeichnet,**
**dass** es eine Bedienungseinheit (10) für die Steuerung des Validierungsprozesses aufweist.

3. Siegelnaht-Prüfgerät nach Anspruch 1 oder 2,
**dadurch gekennzeichnet,**
**dass** es eine Anzeigeeinheit (11) zum Anzeigen des Meßergebnisses aufweist.

4. Siegelnaht-Prüfgerät nach einem der Ansprüche 1 bis 3,
**dadurch gekennzeichnet,**
**dass** es sich bei der Schnittstelle (8) um eine serielle Schnittstelle (9) handelt.

5. Siegelnaht-Prüfgerät nach einem der Ansprüche 1 bis 4,
**dadurch gekennzeichnet,**
**dass** die Schnittstelle (8) zwei Steckanschlüsse enthält.

6. Siegelnaht-Prüfgerät nach einem der Ansprüche 1 bis 5,
**dadurch gekennzeichnet,**
**dass** es eine Schneideeinheit (5) zur Erstellung von Proben mit den zu untersuchenden Siegelnähten aufweist.

7. Siegelnaht-Prüfgerät nach einem der Ansprüche 1 bis 6,
**dadurch gekennzeichnet,**
**dass** das Prüfgerät (1) via Schnittstelle (8) mit einem Siegelgerät (100) als Weiterverarbeitungsgerät verbunden ist.

## Claims

1. A sealing seam test device for the so-called validation of a foil-sealing device (100) by determining the tensile strength of a sealing seam (SS) produced by means of the foil-sealing device, with fixing means (3) for fixing a sealing seam sample comprising a sealing seam (SS) which is to be analysed and a tensile strength test device, whereby the sealing seam to be analysed in the sample is pulled apart and the force needed to break or tear the sealing seam is determined, **characterised in that** the sealing seam test device (1) is equipped with an electronic processing system (12) and the latter is fitted with an interface (8), by which the test device (1) can be connected to a further processing device having a corresponding electronic processing system (12') for direct further processing of the measuring result obtained with each test, whereby the test device can be operated or respectively controlled via its operating unit (101) in connection with the further processing device via interface (8).

2. The sealing seam test device as claimed in Claim 1, **characterised in that** it has an operating unit (10) for controlling the validation process.

3. The sealing seam test device as claimed in any one of Claims 1 or 2, **characterised in that** it has a display unit (11) for displaying the measuring result.

4. The sealing seam test device as claimed in any one of Claims 1 to 3, **characterised in that** the interface (8) is a serial interface (9).

5. The sealing seam test device as claimed in any one of Claims 1 to 4, **characterised in that** the interface (8) contains two plug-in connectors.

6. The sealing seam test device as claimed in any one of Claims 1 to 5, **characterised in that** it has a cutting unit (5) for creating samples with the sealing seams to be analysed.

7. The sealing seam test device as claimed in any one of Claims 1 to 6, **characterised in that** the test device (1) is connected via the interface (8) to a sealing device (100) as a further processing device.

## Revendications

1. Appareil de contrôle de joints scellés pour la validation d'un appareil de scellage de film (100) par la détermination de la résistance à l'arrachement d'un joint scellé (SN) réalisé au moyen de l'appareil de scellage de film, avec des éléments de serrage (3) pour la fixation d'un échantillon de contrôle de joint scellé présentant le joint scellé (SN) à contrôler, avec une électronique de mesure et un dispositif de contrôle de la résistance à la traction, le joint scellé de l'échantillon à contrôler étant étiré et la force nécessaire à la rupture ou à l'arrachement du joint scellé étant déterminée,
**caractérisé en ce que**
l'électronique de mesure de l'appareil de contrôle de joints scellés (1) réalisé sous la forme d'un appareil de table installé horizontalement, muni de mâchoires de serrage (2a, 2b) dépassant par une fente (13) sur sa face supérieure, est réalisée sous la forme d'une électronique de retraitement (12) et est munie d'une interface (8), par le biais de laquelle l'appareil de contrôle (1) peut être relié à un appareil de retraitement muni d'une électronique de retraitement(12') correspondante pour un retraitement immédiat du résultat de mesure obtenu lors de chaque contrôle, l'appareil de contrôle, relié par l'interface (8) avec l'appareil de retraitement, pouvant être utilisé ou commandé par l'unité de commande (101) de celui-ci.

2. Appareil de contrôle de joints scellés selon la revendication 1,
**caractérisé en ce que**
il présente une unité de commande (10) pour la commande du processus de validation.

3. Appareil de contrôle de joints scellés selon la revendication 1 ou 2,
**caractérisé en ce que**
il présente une unité d'affichage (11) pour l'affichage du résultat de la mesure.

4. Appareil de contrôle de joints scellés selon l'une des revendications 1 à 3,
**caractérisé en ce que**
l'interface (8) est une interface série (9).

5. Appareil de contrôle de joints scellés selon l'une des revendications 1 à 4,
**caractérisé en ce que**
l'interface (8) comprend deux connecteurs.

6. Appareil de contrôle de joints scellés selon l'une des revendications 1 à 5,
**caractérisé en ce que**
il est muni d'une unité de découpe (5) pour la réalisation d'échantillons portant les joints scellés à contrôler.

7. Appareil de contrôle de joints scellés selon l'une des revendications 1 à 6,
**caractérisé en ce que**
l'appareil de contrôle (1) est relié avec un appareil de scellage (100) faisant office d'appareil de retraitement par le biais de l'interface (8).
